# EUROPÄISCHE PATENTSCHRIFT

(11) **EP 1 063 146 B1**
(45) Veröffentlichungstag und Bekanntmachung des Hinweises auf die Patenterteilung: **09.04.2003**
(21) Anmeldenummer: 00113058.2
(22) Anmeldetag: 23.06.2000
(51) Int. Cl.: B62D 1/06

(54) **Fahrzeuglenkrad**
Vehicle steering wheel
Volant de véhicule

(30) Priorität: 23.06.1999 DE 29910991 U
(43) Veröffentlichungstag der Anmeldung: 27.12.2000
(73) Patentinhaber: TRW Automotive Safety Systems GmbH, 63743 Aschaffenburg (DE)
(72) Erfinder: Schuler, Patrik, 63785 Obernburg (DE)
(74) Vertreter: Kitzhofer, Thomas, Dipl.-Ing.

(56) Entgegenhaltungen:
- US-A- 5 305 655
- PATENT ABSTRACTS OF JAPAN vol. 011, no. 067 (M-566), 28. Februar 1987 (1987-02-28) -& JP 61 222868 A (NISSAN MOTOR CO LTD), 3. Oktober 1986 (1986-10-03)

## Beschreibung

Die Erfindung betrifft ein Fahrzeuglenkrad gemäß Oberbegriff des Anspruchs 1, mit einem Lenkradskelett aus einem Lenkradkranz, einer Nabe und wenigstens einer die Nabe mit dem Lenkradkranz verbindenden Speiche, sowie mit wenigstens einer am Lenkradskelett befestigten, als separates Teil ausgebildeten Zusatzmasse. Ein derartiges Lenkrad ist aus US-A-5 305 655 bekannt.

Separate, an beliebigen Stellen des Lenkradskelettes zu befestigende Zusatzmassen sollen die träge Masse des Fahrzeuglenkrades insgesamt erhöhen und Vibrationen weitgehend verhindern. Zusatzmassen werden bislang meist an der Nabe befestigt.

Da geringfügige Modifikationen des Lenkrades auch zu einer anderen Abstimmung des Lenkrads bezüglich der trägen Massen seiner Einzelteile führen, sollen geringfügig leichtere oder schwerere Zusatzmassen schnell und einfach am Lenkradskelett befestigt werden können, ohne daß es einer Umkonstruktion des Lenkrades bedarf. Eine solche Feinabstimmung der Einzelteile eines Lenkrades ist auch dann angebracht, wenn bei gleichem Lenkradskelett unterschiedliche Ausführungsformen (z.B. mit zusätzlichen Verblendungen oder Funktionsschaltern) produziert werden sollen.

Die Erfindung schafft ein Fahrzeuglenkrad, bei dem die Zusatzmasse schnell und einfach am Lenkradskelett arretiert werden kann. Dies wird beim Fahrzeuglenkrad der eingangs genannten Art durch eine an der Zusatzmasse angreifende, flexible Klammer erreicht, die die Zusatzmasse am Lenkradskelett hält. Die Klammer ermöglicht ein einfaches, schnelles Anclipsen der Zusatzmasse am Lenkradskelett. Da durch die Klammer ein separates Teil zur Befestigung der Zusatzmasse am Lenkradskelett zur Verfügung steht, kann die Zusatzmasse auch geringfügig anders und damit auch mit einem geringfügig geänderten Gewicht ausgebildet sein, ohne daß es einer anderen Klammer bedarf. Durch Verwendung einer solchen Klammer soll die Zusatzmasse vorzugsweise auch vorgespannt gegen das Lenkradskelett gedrückt werden. Die Vorspannung sollte so ausgewählt sein, daß es zu keinen Vibrationen zwischen Zusatzmasse und Lenkradskelett kommen kann. Zu diesem Zweck kann es vorteilhaft sein, wenn zusätzlich auch noch eine formschlüssige Verbindung zwischen Zusatzmasse und Klammer vorgesehen ist. Diese formschlüssige Verbindung verhindert eine fehlerhafte Positionierung von Zusatzmasse und Klammer zueinander bei der Montage.

Vorzugsweise ist eine weitere formschlüssige Verbindung zwischen Klammer und Lenkradskelett vorhanden. Auch diese erleichert das exakte Positionieren der Klammer am Lenkradskelett bei der Montage. Darüber hinaus dient eine solche zusätzliche formschlüssige Verbindung der zusätzlichen Sicherung der Klammer am Lenkradskelett.

Die erwähnten formschlüssigen Verbindungen können beispielsweise durch eine Ausnehmung und einen entsprechenden Vorsprung gebildet werden, der in die Ausnehmung hineinragt.

Gemäß der bevorzugten Ausführungsform sind mehrere Zusatzmassen am Lenkradkranz über Klammern befestigt. Die Unterbringung der Zusatzmasse erfolgt dabei vorteilhafterweise im Lenkradkranz selbst, wenn dieser ein im Querschnitt offenes Hohlprofil aufweist. Die Klammer drückt die Zusatzmasse in das Innere dieses Hohlprofils und schließt es. Damit steht die Zusatzmasse gegenüber dem Lenkradkranz nach außen nicht oder nur geringfügig vor und behindert den Umschäumungsprozeß auch nicht.

Die Klammer, die den Lenkradkranz umfaßt, kann zusätzlich durch eine von außen sichtbare Blende gesichert werden, die die freien Enden oder Ränder der Klammer zusammendrückt. Die Klammer hat in diesem Zusammenhang eine Doppelfunktion inne, indem sie nicht nur die Zusatzmasse, sondern auch die sichtbare Blende am Lenkradkranz befestigt. Die sichtbare Blende ist vorzugsweise eine Kunststoffblende oder eine Blende aus anderem Material wie Aluminium, Holz oder Verbundwerkstoff, die an der Innenseite des Lenkradkranzes bei besonders hochwertig aussehenden Lenkrädern angeordnet ist. Ihre Befestigung kann gemäß einer Ausgestaltung auch durch eine Clip-Verbindung erreicht werden, indem die Blende, die Klammer und die Umschäumung des Lenkrades so aufeinander abgestimmt sind, daß bei bereits umschäumtem, gegebenenfalls sogar bereits beledertem Lenkrad die Blende auf die Klammer aufgeclipst wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein schematisch dargestelltes erfindungsgemäßes Lenkradskelett mit daran befestigten Zusatzmassen,
- Figur 2 einen Querschnitt durch einen umschäumten und belederten Lenkradkranz eines erfindungsgemäßen Lenkrads gemäß einer ersten Ausführungsform,
- Figur 3 einen Querschnitt durch einen umschäumten und belederten Lenkradkranz eines erfindungsgemäßen Lenkrads gemäß einer zweiten Ausführungsform,
- Figur 4 einen Querschnitt durch einen umschäumten und belederten Lenkradkranz eines erfindungsgemäßen Lenkrads gemäß einer dritten Ausführungsform.

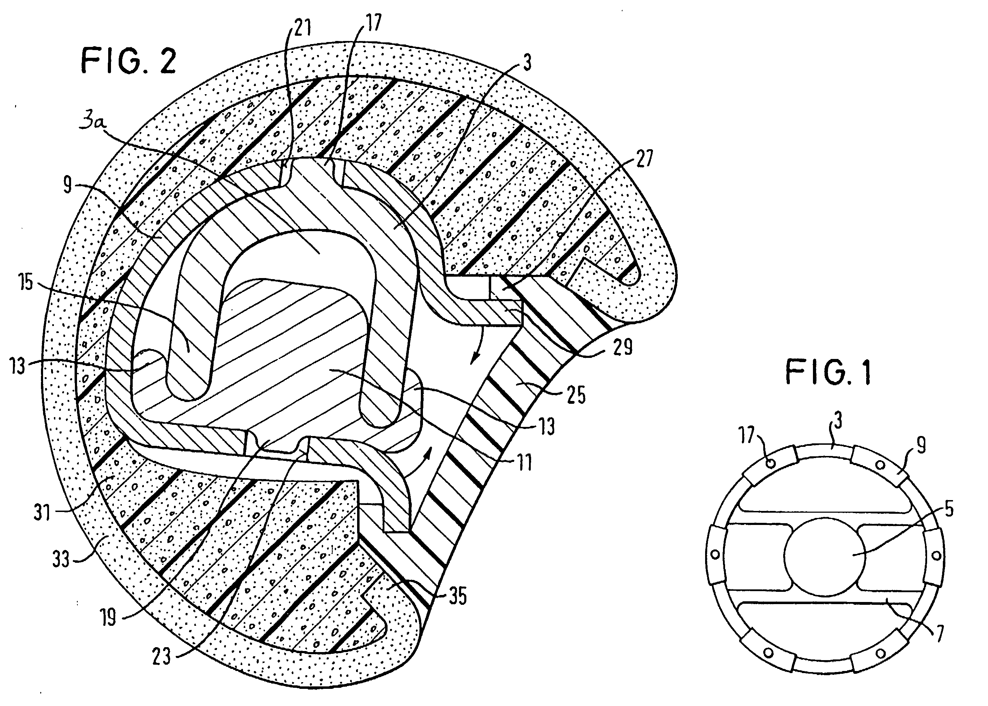

In Figur 1 ist ein Lenkradskelett, bestehend aus einem Lenkradkranz 3, einer Lenkradnabe 5 und mehreren Lenkradkranz 3 und Lenkradnabe 5 verbindenden Speichen 7 dargestellt. Am Umfang des Lenkradkranzes 3 sind, gleichmäßig verteilt, mehrere Zusatzmassen zur Erhöhung der Trägheit des Lenkrades und damit zur Verringerung der Vibrationen im Fahrbetrieb angebracht. Die Zusatzmassen sind in den darauffolgenden Figuren zu erkennen, in Figur 1 sind lediglich Klammern 9 sichtbar, die jeweils der Arretierung einer Zusatzmasse am Lenkradkranz 3 dienen.

In Figur 2, einer stark vergrößerten Ansicht durch ein Lenkrad im Bereich des Lenkradkranzes, ist der Lenkradkranz 3 des Skeletts als offenes Hohlprofil dargestellt. Das Hohlprofil ist zur Rückseite des Lenkrads (in den Zeichnungen unten) offen. Von dieser Seite aus wird eine Zusatzmasse 11 in das Hohlprofil eingesteckt. Die Zusatzmasse ist in ihrer Form der Innenseite des Hohlprofils angepaßt, damit es seitlich zu keinen Querbewegungen zwischen dem Lenkradkranz 3 und der Zusatzmasse 11 kommen kann. Die Zusatzmasse ist aus geschmiedetem. Stahl und wird fast vollständig im Inneren des Lenkradkranzes 3 untergebracht, das in Figur 2 mit 3a bezeichnet ist. Lediglich zwei seitliche Fortsätze 13 umschließen die freien Ränder 15 des Lenkradkranzes 3 und dienen der zusätzlichen Fixierung der Zusatzmasse 11 am Lenkradkranz 3. Die Arretierung der Zusatzmasse 11 am Lenkradkranz 3 erfolgt durch eine C-förmig gebogene Klammer 9, die von außen auf den noch nicht umschäumten und noch nicht belederten Lenkradkranz 3 aufgeclipst werden kann. Die Klammer ist aus einem breiten Federstahlband geformt und drückt die Zusatzmasse 11 unter Vorspannung in das Innere des Lenkradkranzes 3. Damit der Lenkradkranz 3 zur Klammer 9 und diese zur Zusatzmasse 11 exakt positioniert sind und damit die Stellen am Umfang des Lenkradkranzes 3, an denen die Zusatzmasse 11 befestigt werden soll, vorgegeben sind, sind formschüssige Verbindungen zwischen Lenkradkranz 3 und Klammer 9 sowie zwischen Klammer 9 und Zusatzmasse 11 vorgesehen. Die formschüssigen Verbindungen werden durch jeweils wenigstens einen Vorsprung 17 an der Vorderseite des Lenkradkranzes 3 sowie einen Vorsprung 19 an der Zusatzmasse 11 sowie Ausnehmungen 21 und 23 in der Klammer 9 gebildet, in die die Vorsprünge 17 bzw. 19 hineinragen. Auch in Figur 1 sind die Vorsprünge 17 zu erkennen.

Hochwertig aussehende Lenkräder können von außen sichtbare Blenden 25 aus Kunststoff, Alu, Holz oder Verbundwerkstoff haben, die zum Beispiel außenseitig ein Holzimitat besitzen. Eine an der Innenseite des Lenkradkranzes angeordnete Blende 25 aus Kunststoff ist in Figur 2 gezeigt. Am innenseitigen Umfang des Lenkradkranzes sitzt im Bereich jeder Klammer 9 eine Blende 25, die ein Segment des Lenkradkranzes an der Innenseite abdeckt. Die Blende 25 hat äußere Ränder 27, welche aufeinander zu gerichtet sind. Diese Ränder 27 erfassen jeweils einen zugehörigen, nach außen gebogenen Rand 29 der Klammer 9. Es ergibt sich dadurch eine formschlüssige Verbindung zwischen den freien Rändern der Klammer 9 und den Rändern 27 der Blende 25. Die Blende 25 ist bestrebt, die Ränder 29 zusammenzudrücken und dient somit als zusätzliche Arretierung der Klammer 9. Die Klammer 9 wiederum dient der Arretierung der Blende 25, denn die Blende 25 benötigt keine zusätzliche Einrichtung zu ihrer Arretierung am Lenkradkranz.

Wie Figur 2 ferner zu entnehmen ist, ist die Form der Klammer 9 der Außenkontur des Lenkradkranzes 3 und auch der Zusatzmasse 11 weitgehend angepaßt, damit sich eine vollflächige Anlage der Klammer 9 an den Lenkradkranz 3 vorderseitig und an die Zusatzmasse 11 rückseitig ergibt.

Der Lenkradkranz 3 samt der daran angebrachten Klammern und Zusatzmassen 11 wird durch einen geschäumten Mantel 31 umgeben, an den sich bei der gezeigten Ausführungsform außenseitig eine Belederung 33 anschließt. Die Belederung 33 hat zur Blende 25 hin Enden 35, welche ins Innere der Umschäumung des Lenkradkranzes umgelenkt sind.

Im folgenden wird die Herstellung des dargestellten Lenkrades detailliert erläutert. Nach dem Herstellen des Lenkradskelettes werden an den durch die Vorsprünge 17 gekennzeichneten Stellen die Zusatzmassen 11 mittels der Klammern 9 befestigt. Dabei wird zuerst jede Zusatzmasse 11 in das hohle Innere des Lenkradkranzes 3 gedrückt. Anschließend wird die Klammer 9 aufgesetzt, wobei die Vorsprünge 17, 19 in ihre Ausnehmungen 21 bzw. 23 rasten. Anschließend wird das Lenkrad umschäumt und beledert. Schließlich werden von der Innenseite des Lenkradkranzes aus die Blenden 25 eingesetzt, wobei die Ränder 27, 29 eine Rastverbindung bilden, weshalb die Blenden nur auf die Klammern aufgeclipst werden müssen.

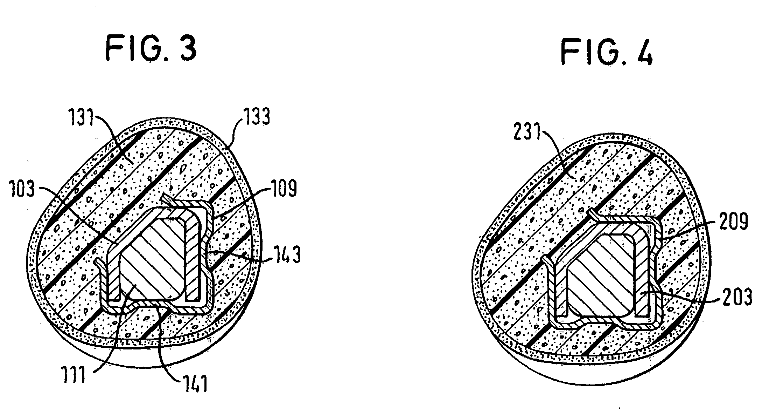

Die in Figur 3 dargestellte Ausführungsform entspricht im wesentlichen der zuvor erläuterten, wobei die bereits erläuterten. Teile die bereits eingeführten Bezugszahlen, erhöht um die Zahl 100, tragen. Als Unterschied zu der in Figur 2 gezeigten Ausführungsform ist die Zusatzmasse 111 vollständig innerhalb des hohlen Inneren des Lenkradkranzes 103 untergebracht. Sie kann auch vollständig in dieses hohle Innere eingeschoben werden. Damit die federnde Klammer 109 mit einer Vorspannung an der Zusatzmasse 111 anliegt, hat sie einen Vorsprung 141, mit dem sie die Zusatzmasse 111 kontaktiert. Ein weiterer Vorsprung 143 dient zur Schaffung einer Vorspannung in einer Querrichtung. Als weiteren Unterschied zu der in Figur 2 gezeigten Ausführungsform ist bei dieser Ausführungsform keine Blende vorgesehen und damit auch keine zusätzliche Sicherung für die Klammer 109.

Die in Figur 4 dargestellte Ausführungsform entspricht im wesentlichen der in Figur 3 gezeigten und bereits erläuterten. Auch hier werden die bereits verwendeten Bezugszahlen wieder verwendet, jedoch erneut um die Zahl 100 erhöht. Im Gegensatz zu der in Figur 3 gezeigten Ausführungsform umfaßt die Klammer 209 den Lenkradkranz 203 weiter, so daß sie sicherer am Lenkradkranz 203 des Skeletts angreift.

Zur Feinabstimmung des Lenkrades lassen sich durch die gleichen Klammern auch unterschiedlich schwere Zusatzmassen am Lenkradskelett anbringen. Die Zusatzmassen werden nur etwas länger oder kürzer ausgebildet, so daß eine Art Baukastensystem entsteht, das mit einfachen Mitteln eine optimale Abstimmung des Lenkrades bezüglich seiner trägen Massen erlaubt.

## Patentansprüche

1. Fahrzeuglenkrad, mit
einem Lenkradskelett aus
einem Lenkradkranz (3; 103; 203),
einer Nabe (5) und
wenigstens einer die Nabe (5) mit dem Lenkradkranz (3; 103; 203) verbindenden Speiche (7),
und mit wenigstens einer am Lenkradskelett befestigten, als separates Teil ausgebildeten Zusatzmasse (11; 111; 211) zur Vibrationsreduzierung,
**gekennzeichnet durch**
eine an der Zusatzmasse (11; 111; 211) angreifende, flexible Klammer (9; 109; 209), die die Zusatzmasse (11; 111; 211) am Lenkradskelett hält.

2. Fahrzeuglenkrad nach Anspruch 1, **dadurch gekennzeichnet, daß** zwischen Zusatzmasse (11) und Klammer (9) eine formschlüssige Verbindung vorgesehen ist.

3. Fahrzeuglenkrad nach Anspruch 1 oder 2, **dadurch gekennzeichnet, daß** zwischen Klammer (9) und Lenkradskelett eine formschlüssige Verbindung vorgesehen ist.

4. Fahrzeuglenkrad nach Anspruch 2 oder 3, **dadurch gekennzeichnet, daß** die formschlüssige Verbindung mittels eines Vorsprungs (17, 19) und einer Ausnehmung (21, 23) gebildet ist, in die der Vorsprung (17, 19) ragt.

5. Fahrzeuglenkrad nach einem der vorhergehenden Ansprüche, **dadurch gekennzeichnet, daß** die Zusatzmasse (11; 111; 211) am Lenkradkranz (3; 103; 203) befestigt ist und die Klammer (9; 109; 209) den Lenkradkranz (3; 103; 203) umfaßt.

6. Fahrzeuglenkrad nach einem der vorhergehenden Ansprüche, **dadurch gekennzeichnet, daß** die Klammer (9; 109; 209) als breiter, ein Segment des Lenkradkranzes (3; 103; 203) abdeckender Körper ausgebildet ist und zur Schaffung einer vollflächigen Anlage an der Außenkontur des Lenkradkranzes (3; 103; 203) an die Außenkontur angepaßt ist.

7. Fahrzeuglenkrad nach einem der vorhergehenden Ansprüche, **dadurch gekennzeichnet, daß** am Umfang des Lenkradkranzes (3; 103; 203) mehrere Zusatzmassen (11; 111; 211) durch Klammern (9; 109; 209) befestigt sind.

8. Fahrzeuglenkrad nach einem der Ansprüche 5 bis 7, **dadurch gekennzeichnet, daß** der Lenkradkranz (3; 103; 203) im Querschnitt ein offenes Hohlprofil aufweist, in dessen Inneres die Zusatzmasse (11; 111; 211) ragt.

9. Fahrzeuglenkrad nach Anspruch 8, **dadurch gekennzeichnet, daß** die Klammer (9; 109; 209) die Zusatzmasse (11; 111; 211) in das Innere des Hohlprofils drückt.

10. Fahrzeuglenkrad nach einem der vorhergehenden Ansprüche, **dadurch gekennzeichnet, daß** eine Lenkradumschäumung (31; 131; 231) die Klammer (9; 109; 209) umgibt.

11. Fahrzeuglenkrad nach Anspruch 10, **gekennzeichnet durch** eine von außen sichtbare Blende (25), die an den freien, einander gegenüberliegenden Rändern (29) der Klammer (9) befestigt ist und diese zusammendrückt.

12. Fahrzeuglenkrad nach Anspruch 11, **dadurch gekennzeichnet, daß** die sichtbare Blende (25), die Klammer (9) und die Umschäumung (31) des Lenkrades so aufeinander abgestimmt sind, daß bei umschäumtem Lenkrad die Blende (25) auf die Klammer (9) aufgeclipst werden kann.

## Claims

1. A vehicle steering wheel, comprising
a steering wheel skeleton consisting of
a steering wheel rim (3; 103; 203),
a hub (5), and
at least one spoke (7) connecting the hub (5) with the steering wheel rim (3; 103; 203),
and comprising at least one additional mass (11; 111; 211) intended for reducing vibration, fastened to the steering wheel skeleton and constructed as a separate part,
**characterized by**
a flexible clip (9; 109; 209) engaging on the additional mass (11; 111; 211) and holding the additional mass (11; 111; 211) against the steering wheel skeleton.

2. The vehicle steering wheel according to Claim 1, **characterized in that** a form-fitting connection is provided between the additional mass (11) and the clip (9).

3. The vehicle steering wheel according to Claim 1 or 2, **characterized in that** a form-fitting connection is provided between the clip (9) and the steering wheel skeleton.

4. The vehicle steering wheel according to Claim 2 or 3, **characterized in that** the form-fitting connection is formed by means of a projection (17, 19) and a recess (21, 23), into which the projection (17, 19) projects.

5. The vehicle steering wheel according to any of the preceding claims, **characterized in that** the additional mass (11; 111; 211) is fastened to the steering wheel rim (3; 103; 203) and the clip (9; 109; 209) embraces the steering wheel rim (3; 103; 203).

6. The vehicle steering wheel according to any of the preceding claims, **characterized in that** the clip (9; 109; 209) is constructed as a wide body covering a segment of the steering wheel rim (3; 103; 203) and is adapted to the outer contour of the steering wheel rim (3; 103; 203) in order to provide an all-over contact with the outer contour.

7. The vehicle steering wheel according to any of the preceding claims, **characterized in that** several additional masses (11; 111; 211) are fastened on the periphery of the steering wheel rim (3; 103; 203) by clips (9; 109; 209).

8. The vehicle steering wheel according to any of Claims 5 to 7, **characterized in that** the steering wheel rim (3; 103; 203), as seen in cross-section, has an open hollow section, into the interior of which the additional mass (11; 111; 211) projects.

9. The vehicle steering wheel according to Claim 8, **characterized in that** the clip (9; 109; 209) presses the additional mass (11; 111; 211) into the interior of the hollow section.

10. The vehicle steering wheel according to any of the preceding claims, **characterized in that** a foam casing (31; 131; 231) of the steering wheel surrounds the clip (9; 109; 209).

11. The vehicle steering wheel according to Claim 10, **characterized by** a cover (25), visible from the outside, which is fastened to the free edges (29) of the clip (9) lying opposite each other and presses them together.

12. The vehicle steering wheel according to Claim 11, **characterized in that** the visible cover (25), the clip (9) and the foam casing (31) of the steering wheel are coordinated with each other such that with the steering wheel encased in foam, the cover (25) can be clipped onto the clip (9).

## Revendications

1. Volant de véhicule comportant
une armature de volant, constituée
d'une couronne de volant (3 ; 103 ; 203),
d'un moyeu (5) et
d'au moins un rayon (7) reliant le moyeu (5) à la couronne de volant (3 ; 103 ; 203),
et comportant au moins une masse additionnelle (11 ; 111 ; 211) réalisée sous forme de pièce séparée et destinée à réduire les vibrations,
**caractérisé par**
une agrafe (9 ; 109 ; 209) flexible, s'engageant sur la masse additionnelle (11 ; 111 ; 211) et retenant la masse additionnelle (11 ; 111 ; 211) sur l'armature de volant.

2. Volant de véhicule selon la revendication 1, **caractérisé en ce qu'**une liaison par coopération de formes est prévue entre la masse additionnelle (11) et l'agrafe (9).

3. Volant de véhicule selon la revendication 1 ou 2, **caractérisé en ce qu'**une liaison par coopération de formes est prévue entre l'armature de volant et l'agrafe (9).

4. Volant de véhicule selon la revendication 3, **caractérisé en ce que** la liaison par coopération de formes est constituée au moyen d'une saillie (17, 19) et d'un évidement (21, 23) dans lequel plonge la saillie (17).

5. Volant de véhicule selon l'une des revendications précédentes, **caractérisé en ce que** la masse additionnelle (11 ; 111 ; 211) est fixée sur la couronne de volant (3 ; 103 ; 203), et l'agrafe (9 ; 109 ; 209) entoure la couronne de volant (3 ; 103 ; 203).

6. Volant de véhicule selon l'une des revendications précédentes, **caractérisé en ce que** l'agrafe (9 ; 109 ; 209) est réalisée sous forme de corps large recouvrant un segment de la couronne de volant (3 ; 103 ; 203) et est adaptée au contour extérieur pour créer un appui sur toute la surface du contour extérieur de la couronne de volant (3 ; 103 ; 203).

7. Volant de véhicule selon l'une des revendications précédentes, **caractérisé en ce que** plusieurs masses additionnelles (11 ; 111 ; 211) sont fixées par des agrafes (9 ; 109 ; 209) sur la périphérie de la couronne de volant (3 ; 103 ; 203).

8. Volant de véhicule selon l'une des revendications 5 à 7, **caractérisé en ce que** la couronne de volant (3 ; 103 ; 203) présente en section transversale un profil creux ouvert à l'intérieur duquel pénètre la masse additionnelle (11 ; 111 ; 211).

9. Volant de véhicule selon la revendication 8, **caractérisé en ce que** l'agrafe (9 ; 109 ; 209) presse la masse additionnelle (11 ; 111 ; 211) dans l'intérieur du profil creux.

10. Volant de véhicule selon l'une des revendications précédentes, **caractérisé en ce qu'**un revêtement de mousse (31 ; 131 ; 231) du volant entoure l'agrafe (9 ; 109 ; 209).

11. Volant de véhicule selon la revendication 10, **caractérisé par** un cache (25) visible depuis l'extérieur qui est fixé sur les bords libres (29) opposés l'un à l'autre de l'agrafe (9) et qui comprime celle-ci.

12. Volant de véhicule selon la revendication 10,**caractérisé en ce que** le cache visible (25), les agrafes (9) et l'entourage de mousse (31) du volant sont adaptés les uns aux autres de telle sorte que lorsque le volant est revêtu de mousse, le cache (25) peut être encliqueté sur l'agrafe (9).
